(19) Europäisches Patentamt
European Patent Office
Office européen des brevets

(11) EP 1 120 871 A1

(12) EUROPEAN PATENT APPLICATION

(43) Date of publication:
01.08.2001 Bulletin 2001/31

(51) Int Cl.$^7$: H01S 3/067, G02B 6/16

(21) Application number: 01300642.4

(22) Date of filing: 25.01.2001

(84) Designated Contracting States:
AT BE CH CY DE DK ES FI FR GB GR IE IT LI LU
MC NL PT SE TR
Designated Extension States:
AL LT LV MK RO SI

(30) Priority: 25.01.2000 JP 2000015483

(71) Applicant: THE FURUKAWA ELECTRIC CO., LTD.
Tokyo 100-8322 (JP)

(72) Inventors:
• Tsuda, Toshiaki,
c/o The Furukawa Electric Co Ltd
Tokyo 100-8322 (JP)
• Shirasaka, Yusei,
c/o The Furukawa Electric Co Ltd
Tokyo 100-8322 (JP)

• Ohta, Toshihiko,
c/o The Furukawa Electric Co Ltd
Tokyo 100-8322 (JP)
• Namiki, Shu, c/o The Furukawa Electric Co Ltd
Tokyo 100-8322 (JP)
• Yodo, Shigehito,
c/o The Furukawa Electric Co Ltd
Tokyo 100-8322 (JP)
• Mizuno, Kazuyo,
c/o The Furukawa Electric Co Ltd
Tokyo 100-8322 (JP)
• Emori, Yoshihiro, c/o Furukawa Electric Co Ltd
Tokyo 100-8322 (JP)

(74) Representative: Dealtry, Brian et al
Eric Potter Clarkson,
Park View House,
58 The Ropewalk
Nottingham NG1 5DD (GB)

(54) **Optical component for compensating the temperature dependence of the gain**

(57) The temperature dependency of an EDFA is compensated in a wavelength of 1570 to 1600 nm to realize a wavelength division multiplexing transmission. First and second long period gratings different in grating period from each other are formed in an optical fiber. The peak wavelength of the waveform of the light transmission loss characteristic of the first long period grating is formed on the shorter wavelength side than a transmission band. The peak wavelength of the waveform of the light transmission loss characteristic of the second long period grating is formed on the longer wavelength side than a transmission band. The waveforms of the above respective light transmission loss characteristics and the peak wavelengths of the waveforms are shifted depending on the temperature, and the light transmission loss value on the shorter wavelength side of the transmission band is increased as the temperature becomes higher, and the light transmission loss value on the longer wavelength side of the transmission band increases as the temperature becomes lower, to thereby compensate the temperature dependent gain characteristic of the optical amplifier in the gain compensation band on the shorter wavelength side and the longer wavelength side of the transmission band.

Fig. 8

EP 1 120 871 A1

**Description**

BACKGROUND OF THE INVENTION

1. Field of the Invention

The present invention relates to an optical component used for compensating the temperature dependent gain characteristic (temperature dependency of gain) of an optical amplifier such as an EDFA (erbium doped optical amplifier).

2. Description of the Related Art

The development of an information society has a tendency to progressively increase communication data size. For that reason, it is necessary and essential to make a speed higher and a capacity larger in an optical fiber communication. As an approach to the high speed and the large capacity, there has been developed an optical amplifier of optical fiber amplification type which can amplify an optical signal as light by using a rare earth element doped optical fiber such as erbium doped fiber. The development of the optical fiber of optical fiber amplification type makes enlargement of the capacity of a signal light per se rapidly grow.

On the other hand, in order to expand the communication capacity in the optical communication, there has been developed a communication through a wavelength division multiplexing transmission method that transmits optical signals having different wavelengths through one optical fiber. It is expected to realize the expansion in communication capacity and a long-distance transmission by applying the above-mentioned optical amplifier of optical fiber amplification type to an optical communication system using the wavelength division multiplexing transmission method (wavelength division multiplexing transmission method).

An EDFA is a representative example of the above optical amplifier of optical fiber amplification type. At present, a wavelength division multiplexing optical transmission with a wavelength of about 1530 nm to 1560 nm which is a gain band of the EDFA (called "C-BAND") is conducted by using the EDFA. In recent years, in order to further increase the communication information amount, it is required to make the applied wavelength band of the wavelength division multiplexing optical transmission broad in the band. Investigations for expanding the applied wavelength band of the wavelength division multiplexing optical transmission from a wavelength of 1530 nm mentioned above to about a wavelength of 1570 nm to 1600 nm that are called "L-BAND" by using the above EDFA are now actively being conducted.

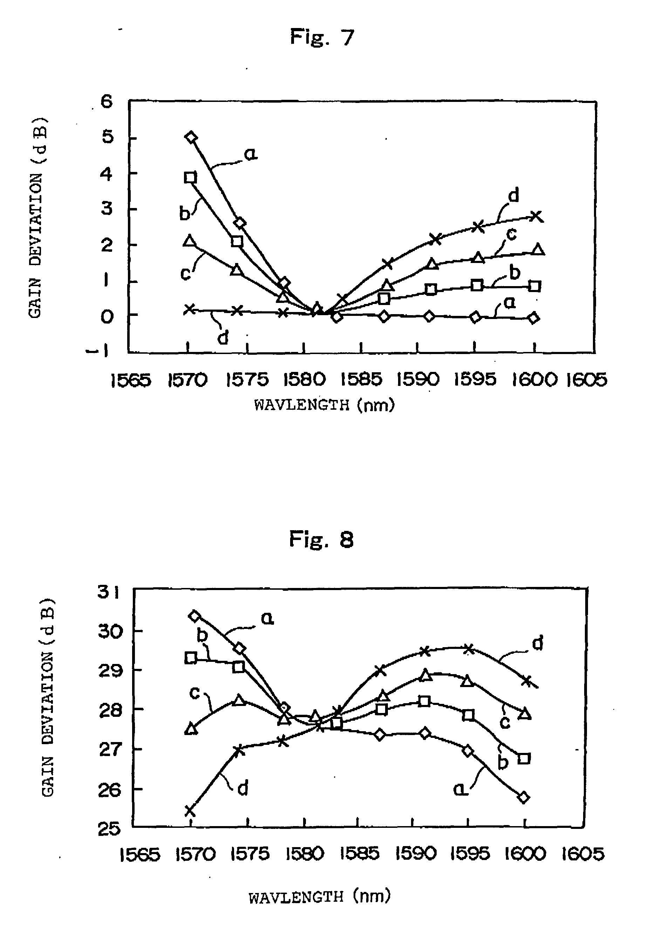

However, for example, a characteristic line a of Fig. 8 shows the dependency of gain wavelength of the EDFA at 70°C. Also, a characteristic line b shows the dependency of gain wavelength of the EDFA at 50°C. Further, a characteristic line c shows the dependency of gain wavelength of the EDFA at 25°C. Still further, a characteristic line d shows the dependency of gain wavelength of the EDFA at -5°C. As shown in those characteristic lines a to d, the gain of the EDFA in the L-BAND has a large temperature dependency.

In other words, when the above L-BAND is the transmission band, the gain of the EDFA on the shorter wavelength side (a wavelength of about 1570 nm) of the transmission band in a higher temperature region is larger than that in a lower temperature region. Also, the gain of the EDFA on the longer wavelength side (a wavelength of about 1600 nm) of the transmission band in the lower temperature region is larger than that in the higher temperature region. The present inventors have found out the above gain characteristics of the EDFA in the L-BAND through experiments.

Specifically, the gain of the EDFA at a wavelength of 1570 nm is largest at 70°C and smallest at -5°C, and the difference therebetween is about 5 dB. As the wavelength approaches from 1570 nm to 1582 nm, the difference between the gains of the EDFA due to the differences in temperature is gradually reduced. With a wavelength of 1582 nm, the difference between the EDFA gain at 70°C and the EDFA gain at -5°C is almost 0. Also, the gain of the EDFA on the longer wavelength side than a wavelength of 1582 nm becomes largest at -5°C and smallest at 70°C conversely to the case of the shorter wavelength side. In a wavelength of 1600 nm, the difference between the EDFA gain at 70°C and the EDFA gain at -5°C is about 3 dB.

For that reason, when the wavelength division multiplexing transmission using the L-BAND is conducted by employing the EDFA having the above-mentioned gain characteristics, there arises the following problem. That is, the rate of amplification of the optical signal varies depending on the temperature at which the wavelength division multiplexing transmission is conducted, This makes it impossible to carry out a wavelength division multiplexing transmission of high quality.

SUMMARY OF THE INVENTION

The present invention has been made to solve the above problem inherent in prior art and, therefore, an object of the present invention is to provide an optical component that is capable of compensating the temperature dependent gain characteristic of an optical amplifier within an applied temperature range in a set gain compensation band, including, for example, compensating the temperature dependent gain characteristic of the EDFA in the L-BAND.

In order to achieve the above object, the present invention has the following structures to solve the above problem. That is, according to a first structure of the present invention, there is provided as a measure to solve the above problem an optical component comprising a structure of compensating a temperature dependent gain characteristic of an optical amplifier in which, in the gain on the shorter wavelength side of a transmission band of the optical amplifier, the gain in a higher temperature region is larger than that in a lower temperature region while, in the gain on the longer wavelength side of the transmission band, the gain in a lower temperature region is larger than that in a higher temperature region.

According to a second structure of the present invention, in the first structure of the invention, the optical component is characterized in that the structure of compensating the temperature dependent gain characteristic of the optical amplifier comprises: a first temperature dependent gain compensation region that compensates the temperature dependent gain characteristic on the shorter wavelength side of the transmission band; and a second temperature dependent gain compensation region that compensates the temperature dependent gain characteristic on the longer wavelength side of the transmission band.

According to a third structure of the present invention, in the second structure of the invention, the optical component is characterized in that:

in the first temperature dependent gain compensation region, the gain of the optical amplifier at the temperature of a low temperature reference in a lower temperature region, which is smaller than the gain of the optical amplifier in a higher temperature region on the shorter wavelength side of the transmission band, is the gain of a low temperature reference, and a deviation of the gain of the optical amplifier at a high temperature on the shorter wavelength side of the transmission band is compensated on the basis of the gain of the low temperature reference; and
in the second temperature dependent gain compensation region, the gain of the optical amplifier at the temperature of a high temperature reference in a higher temperature region, which is smaller than the gain of the optical amplifier in a lower temperature region on the longer wavelength side of the transmission band, is the gain of a high temperature reference, and a deviation of the gain of the optical amplifier at a low temperature on the longer wavelength side of the transmission band is compensated on the basis of the gain of the high temperature reference.

According to a fourth structure of the present invention, in the second structure of the invention, the optical component is characterized in that:

the first temperature dependent gain compensation region has a first long period grating that is formed in an optical waveguide formed of a core and a cladding;
the second temperature dependent gain compensation region has a second long period grating, which is formed in an optical waveguide formed of a core and a cladding, different in period from the first long period grating;
the first long period grating compensates the gain of the optical amplifier on the shorter wavelength side of the transmission band in the higher temperature region; and
the second long period grating compensates the gain of the optical amplifier on the longer wavelength side of the transmission band in the lower temperature region.

According to a fifth structure of the present invention, in the third structure of the invention, the optical component is characterized in that:

the first temperature dependent gain compensation region has a first long period grating that is formed in an optical waveguide formed of a core and a cladding;
the second temperature dependent gain compensation region has a second long period grating, which is formed in an optical waveguide formed of a core and a cladding, different in period from the first long period grating;
the first long period grating compensates the gain of the optical amplifier on the shorter wavelength side of the transmission band in the higher temperature region; and
the second long period grating compensates the gain of the optical amplifier on the longer wavelength side of the transmission band in the lower temperature region.

According to a sixth structure of the present invention, in the fourth structure of the invention, the optical component is characterized in that:

in the first long period grating, a peak wavelength of a waveform of a light transmission loss characteristic caused by the first long period grating is positioned on the shorter wavelength side than the transmission band;
in the second long period grating, a peak wavelength of a waveform of a light transmission loss characteristic caused by the second long period grating is positioned on the longer wavelength side than the transmission band, and

an amplitude waveform with respect to the wavelength of the light transmission loss characteristic of the first long period grating and an amplitude waveform with respect to the wavelength of the light transmission loss characteristic of the second long period grating are shifted depending on the temperature, whereby the light transmission loss on the shorter wavelength side of the transmission band increases as the temperature becomes higher whereas the light transmission loss on the longer wavelength side of the transmission band increases as the temperature becomes lower, thereby compensating the temperature dependent gain characteristic in a gain compensation band of the optical amplifier.

According to a seventh structure of the present invention, in the fifth structure of the invention, the optical component is characterized in that:

in the first long period grating, a peak wavelength of a waveform of a light transmission loss characteristic caused by the first long period grating is positioned on the shorter wavelength side than the transmission band;
in the second long period grating, a peak wavelength of a waveform of a light transmission loss characteristic caused by the second long period grating is positioned on the longer wavelength side than the transmission band; and
an amplitude waveform with respect to the wavelength of the light transmission loss characteristic of the first long period grating and an amplitude waveform with respect to the wavelength of the light transmission loss characteristic of the second long period grating are shifted depending on the temperature, whereby the light transmission loss on the shorter wavelength side of the transmission band increases as the temperature becomes higher whereas the light transmission loss on the longer wavelength side of the transmission band increases as the temperature becomes lower, thereby compensating the temperature dependent gain characteristic in a gain compensation band of the optical amplifier.

According to an eighth structure of the present invention, in the fourth structure of the invention, the optical component is characterized in that:

the first long period grating has a peak wavelength of the waveform of the light transmission loss characteristic on the shorter wavelength side than the transmission band;
the difference between the maximum value and the minimum value of the light transmission loss within the applied temperature range is about 1 dB or less in a band on the longer wavelength side than a band in which the temperature dependent gain characteristic of the optical amplifier is to be compensated, within the transmission band;
the second long period grating has a peak wavelength of the waveform of the light transmission loss characteristic on the longer wavelength side than the transmission band; and
the difference between the maximum value and the minimum value of the light transmission loss within the applied temperature range is about 1 dB or less in a band on the shorter wavelength side than a band in which the temperature dependent gain characteristic of the optical amplifier is to be compensated, within the transmission band.

According to a ninth structure of the present invention, in the seventh structure of the invention, the optical component is characterized in that:

the first long period grating has a peak wavelength of the waveform of the light transmission loss characteristic on the shorter wavelength side than the transmission band;
the difference between the maximum value and the minimum value of the light transmission loss within the applied temperature range is about 1 dB or less in a band on the longer wavelength side than a band in which the temperature dependent gain characteristic of the optical amplifier is to be compensated, within the transmission band;
the second long period grating has a peak wavelength of the waveform of the light transmission loss characteristic on the longer wavelength side than the transmission band; and
the difference between the maximum value and the minimum value of the light transmission loss within the applied temperature range is about 1 dB or less in the shorter wavelength band than a band in which the temperature dependent gain characteristic of the optical amplifier is to be compensated, within the transmission band.

According to a tenth structure of the present invention, in the fourth structure of the invention, the optical component is characterized in that:

each of the first and second long period gratings has an intrinsic light transmission loss characteristic having a plurality of light transmission loss peaks of from a primary mode to an n-th order mode (N is an integer of 2 or more) with a wavelength interval put between the peaks, the peaks being caused by coupling of a propagation mode with a higher-order cladding mode through the long period grating;

a period of the first long period grating is determined such that the light transmission loss peak wavelength of a predetermined set order mode among the intrinsic light transmission loss peaks is on the shorter wavelength side than the transmission band, and the light transmission loss peak wavelength of an order mode subsequent to the set order is on the longer wavelength side than the transmission band;

a period of the second long period grating is determined such that the light transmission loss peak wavelength of a predetermined set order mode among the intrinsic light transmission loss peaks is on the longer wavelength side than the transmission band, and the light transmission loss peak wavelength of an order mode preceding to the set order is on the shorter wavelength side than the transmission band; and

the shift amount of the respective light transmission loss peak wavelengths of the set order modes of the first and second long period gratings is set to about 0.05 nm/$°$C or higher, respectively.

According to an eleventh structure of the present invention, in the ninth structure of the invention, the optical component is characterized in that:

each of the first and second long period gratings has an intrinsic light transmission loss characteristic having a plurality of light transmission loss peaks of from a primary mode to an n-th order mode (N is an integer of 2 or more) with the wavelength intervals put between the peaks, the peaks being caused by coupling of a propagation mode with a higher-order cladding mode through the long period grating;

a period of the first long period grating is determined such that the light transmission loss peak wavelength of a predetermined set order mode among the intrinsic light transmission loss peaks is on the shorter wavelength side than the transmission band, and the light transmission loss peak wavelength of an order mode subsequent to the set order is on the longer wavelength side than the transmission band;

a period of the second long period grating is determined such that the light transmission loss peak wavelength of a predetermined set order mode among the intrinsic light transmission loss peaks is on the longer wavelength side than the transmission band, and the light transmission loss peak wavelength of an order mode preceding to the set order is on the shorter wavelength side than the transmission band; and

the shift amount of the respective light transmission loss peak wavelengths of the set order modes of the first and second long period gratings is set to about 0.05 nm/$°$C or higher, respectively.

According to a twelfth structure of the present invention, in the fourth structure of the invention, the optical component is characterized in that the length of the first long period grating in the longitudinal direction is longer than the length of the second long period grating in the longitudinal direction.

According to a thirteenth structure of the present invention, in the fourth structure of the invention, the optical component is characterized in that the temperature characteristic of the first long period grating is smaller than the temperature characteristic of the second long period grating.

According to a fourteenth structure of the present invention, in the fourth structure of the invention, the optical component is characterized in that the portions for forming the first long period grating and the second long period grating are coated with a resin having a temperature coefficient negative in refractive index.

According to a fifteenth structure of the present invention, in the eighteenth structure of the invention, the optical component is characterized in that the portions for forming the first long period grating and the second long period grating are coated with a resin having a temperature coefficient negative in refractive index.

According to a sixteenth structure of the present invention, in the eleventh structure of the invention, the optical component is characterized in that the portions for forming the first long period grating and the second long period grating are coated with a resin having a temperature coefficient negative in refractive index.

According to a seventeenth structure of the present invention, in the fourteenth structure of the invention, the optical component is characterized in that the temperature coefficient of the refractive index of the resin having the temperature coefficient negative in refractive index is -0.5 x $10^{-4}$/$°$C or lower.

According to an eighteenth structure of the present invention, in the fifteenth structure of the invention, the optical component is characterized in that the temperature coefficient of the refractive index of the resin having the temperature coefficient negative in refractive index is -0.5 x $10^{-4}$/$°$C or lower.

According to a nineteenth structure of the present invention, in the sixteenth structure of the invention, the optical component is characterized in that the temperature coefficient of the refractive index of the resin having the temperature coefficient negative in refractive index is -0.5 x $10^{-4}$/$°$C or lower.

Up to now, there has been an optical amplifier having the temperature dependent gain characteristic in which the gain on the shorter wavelength side of a transmission band in a higher temperature region is larger than that in a lower temperature region, and the gain on the longer wavelength side of the transmission band in a lower temperature region is larger than that in a higher temperature region. However, there has not been proposed an optical component that compensates the temperature dependent gain characteristic of the above optical amplifier. The optical component of the present invention is capable of compensating the temperature dependent gain characteristic of the optical amplifier mentioned above, and hence is epoch-making.

Also, according to the structure in which the first temperature dependent gain compensation region and the second temperature dependent gain compensation region are provided (the second structure of the present invention), the temperature dependent gain characteristic on the shorter wavelength side of the transmission band can be compensated in the first temperature dependent gain compensation region, and the temperature dependent gain characteristic on the longer wavelength side of the transmission band can be compensated in the second temperature dependent gain compensation region.

Further, according to the structure in which, in the first temperature dependent gain compensation region, the gain of the optical amplifier at a low temperature reference temperature in a lower temperature region, which is smaller than the gain of the optical amplifier in a higher temperature region on the shorter wavelength side of the transmission band, is set as a low temperature reference gain, and a deviation of the gain of the optical amplifier at a high temperature on the shorter wavelength side of the transmission band is compensated on the basis of the low temperature reference gain, and in which, in the second temperature dependent gain compensation region, the gain of the optical amplifier at a high temperature reference temperature in a higher temperature region, which is smaller than the gain of the optical amplifier in a lower temperature region on the longer wavelength side of the transmission band, is set as a high temperature reference gain, and a deviation of the gain of the optical amplifier at a low temperature on the longer wavelength side of the transmission band is compensated on the basis of the high temperature reference gain (the third structure of the present invention), the temperature dependent gain characteristic of the above optical amplifier can be accurately compensated over the entire transmission band by the above compensation of the deviation of the gains.

Still further, according to the structure in which the first temperature dependent gain compensation region has a first long period grating (LPG) formed in an optical waveguide, and the second temperature dependent gain compensation region has a second long period grating different in period from the first long period grating which is formed in an optical waveguide (the fourth structure of the present invention), the optical component having an excellent effect of compensating temperature dependent gain characteristic of the optical amplifier can readily be manufactured exactly as designed. As a result, the gain of the optical amplifier over the entire compensation band of the transmission band can be compensated by the first and second long period gratings.

Yet still further, according to the structure in which: the first and second long period of gratings have the peak wavelengths of the waveforms of the light transmission loss characteristics caused by the respective long period gratings; in the first long period grating, the peak wavelength is positioned on the shorter wavelength side than the transmission band whereas in the second long period grating, the peak wavelength is positioned on the longer wavelength side than the transmission band; and an amplitude waveform with respect to the wavelength of the light transmission loss characteristic is shifted depending on the temperature to compensate the temperature dependent gain characteristic of the optical amplifier in the gain compensation band (the fifth structure of the present invention), the excellent effects described above can be achieved by the temperature dependent shift characteristic of the amplitude waveform with respect to the wavelength of the above light transmission loss characteristic.

Yet still further, according to the structure in which, in the first long period grating, the difference between the maximum value and the minimum value of the light transmission loss within the applied temperature range is about 1 dB or less in, of the transmission band, the longer wavelength band than a band in which the temperature dependent gain characteristic of the optical amplifier is to be compensated, and in which, in the second long period grating, the difference between the maximum value and the minimum value of the light transmission loss within the applied temperature range is about 1 dB or less in, of the transmission band, the shorter wavelength band than a band in which the temperature dependent gain characteristic of the optical amplifier is to be compensated (the sixth structure of the present invention), an adverse influence can be suppressed from being given to a band in which the temperature dependent gain characteristic of the optical amplifier is not compensated by the loss characteristics of the long period gratings.

Yet still further, according to the structure in which each of the first and second long period gratings has an inherent light transmission loss characteristic having a plurality of light transmission loss peaks of from a primary mode to an N-th order mode (N is an integer of 2 or more) with wavelength intervals put between the peaks, the peaks being caused by coupling of a propagation mode with a higher-order cladding mode through the respective long period gratings, and the shift amount of the respective light transmission loss peak wavelengths of the respective set order modes set at the long period gratings is set to about 0.05 nm/°C or higher (the seventh structure of the present invention), the temperature dependent gain characteristic of an EDFA, for example, in the L-BAND can be effectively compensated.

Yet still further, according to the structure in which the length of the first long period grating in the longitudinal direction is set to be longer than the length of the second long period grating in the longitudinal direction (the eighth structure of the present invention), the magnitude of the peak wavelength of the waveform of the light transmission loss characteristic caused by coupling of the propagation mode and the higher order cladding mode through the first grating and the inclination of a bottom portion of the waveform can be made larger than the magnitude of the peak wavelength of the waveform of the light transmission loss characteristic caused by coupling of the propagation mode and the higher order cladding mode through the second grating and the inclination of a bottom portion of the waveform. For that reason, the temperature dependent gain characteristic of the currently-used EDFA in the L-BAND can be more surely compensated.

Yet still further, according to the structure in which the temperature characteristic of the first long period grating is made smaller than the temperature characteristic of the second long period grating (the ninth structure of the present invention), the temperature dependent gain characteristic of the optical amplifier where the temperature dependent gain characteristic on the longer wavelength side of the transmission band is larger than the temperature dependent gain characteristic on the shorter wavelength side of the transmission band can be accurately compensated.

Yet still further, according to the structure in which portions for forming the first long period grating and the second long period grating are coated with a resin having a temperature coefficient negative in refractive index (the tenth structure of the present invention), the shift amount of the respective light transmission loss peak wavelengths of the set order modes set to the respective first and second long period gratings can be set to about 0.05 nm/$^\circ$C or higher. As a result, the temperature dependent gain characteristic of an EDFA in the L-BAND, for example, can be effectively compensated.

Yet still further, according to the structure in which the temperature coefficient of the refractive index of the resin having the temperature coefficient negative in refractive index is set to -0.5 x $10^{-4}$/$^\circ$C or lower (the eleventh structure of the present invention), the shift amount of the respective light transmission loss peak wavelengths of the set order modes set to the respective first and second long period gratings can readily and surely be set to about 0.05 nm/$^\circ$C or higher. As a result, the temperature dependent gain characteristic of an EDFA in the L-BAND, for example, can be compensated more securely.

BRIEF DESCRIPTION OF THE DRAWINGS

These and other objects and advantages of the present invention will become more apparent and more readily appreciated from the following detailed description of the exemplary embodiments of the invention taken in conjunction with the accompanying drawings, in which:

Fig. 1A is a graph showing the light transmission loss characteristics at -5$^\circ$C, 25$^\circ$C, 50$^\circ$C and 70$^\circ$C in a first long period grating of an optical component according to an embodiment of the present invention;

Fig. 1B is a graph showing the light transmission loss characteristics at -5$^\circ$C, 25$^\circ$C, 50$^\circ$C and 70$^\circ$C in a second long period grating of the optical component according to the embodiment of the present invention;

Fig. 2 is a graph showing in a superimposing manner light transmission loss characteristics of the first long period grating and the second long period grating at -5$^\circ$C;

Fig. 3 is a graph schematically showing a relation between a period of a grating formed in an optical fiber and a coupling wavelength of the optical fiber when the composition of the optical fiber is not changed;

Fig. 4 is a graph showing the dependency of gain wavelength at -5$^\circ$C, 25$^\circ$C, 50$^\circ$C and 70$^\circ$C when the optical component of the embodiment is combined with an EDFA;

Fig. 5 is an explanatory diagram schematically showing a long period grating forming regions which constitute the optical component according to the embodiment;

Fig. 6 is a graph showing the wavelength dependency of a gain deviation of the EDFA in an L-BAND at -5$^\circ$C, 25$^\circ$C, 50$^\circ$C and 70$^\circ$C which is obtained with the gain at 25$^\circ$C as reference;

Fig. 7 is a graph showing the wavelength dependency of a gain deviation of the EDFA in the L-BAND at -5$^\circ$C, 25$^\circ$C, 50$^\circ$C and 70$^\circ$C which is obtained with the gain at -5$^\circ$C as reference when the wavelength is 1570 to 1582 nm and with the gain at 70$^\circ$C as reference when the wavelength is 1582 to 1600 nm; and

Fig. 8 is a graph showing the dependency of gain wavelength of a gain deviation of an L-BAND at -5$^\circ$C, 25$^\circ$C, 50$^\circ$C and 70$^\circ$C of the EDFA.

DETAILED DESCRIPTION OF THE PREFERRED EMBODIMENTS

Now, a description will be given in more detail of preferred embodiments of the present invention with reference to the accompanying drawings. An optical device according to this embodiment compensates the temperature dependent gain characteristic of an EDFA as an optical amplifier in, for example, an L-BAND (wavelength of about 1570 nm to about 1600 nm), to thereby realize a high quality wavelength division multiplexing transmission with the L-BAND as a transmission band within an applied environmental temperature range.

As shown in Fig. 8, according to the temperature dependent gain characteristic of the EDFA, the gain on the shorter wavelength side (in this case, a wavelength of 1570 nm to 1582 nm) of a transmission band (in this case, a wavelength of 1570 nm to 1600 nm) in a higher temperature region is larger than that in a lower temperature region. Also, the gain on the longer wavelength side (in this case, a wavelength of 1582 nm to 1600 nm) of the transmission band in a lower temperature region is larger than that in a higher temperature region.

Therefore, the optical component according to this embodiment is so structured as to have a first temperature dependent gain compensation region and a second temperature dependent gain compensation region described in the following, in order to compensate the temperature dependent gain characteristic of the above EDFA.

The above first temperature dependent gain compensation region is to compensate the temperature dependent gain characteristic on the shorter wavelength side of the transmission band. The first temperature dependent gain compensation region has the light transmission loss characteristic in that the loss on the shorter wavelength side of the transmission band in a higher temperature region is larger than that in a lower temperature region.

Also, the above second temperature dependent gain compensation region is to compensate the temperature dependent gain characteristic on the longer wavelength side of the transmission band. The second temperature dependent gain compensation region has the light transmission loss characteristic that the loss on the longer wavelength side of the transmission band in a lower temperature region is larger than that in a higher temperature region.

In this embodiment, an optical fiber is used as an optical waveguide. The optical fiber is formed by covering the periphery of a core with a cladding. The optical fiber is a single mode optical fiber that is generally used for optical communication, and the structure of the refractive index is of a well-known step index type. The specific refractive index difference $\Delta c$ of the core of the optical fiber with respect to pure quartz is set to, for example, 0.35%, and the diameter of the core of the above optical fiber is set to about 10 $\mu$m. Also, the above core is made of quartz doped with germanium of $GeO_2$. In addition, the cladding of the above optical fiber is made of pure quartz,

In the present specification, the specific refractive index difference $\Delta c$ of the core with respect to pure quartz is defined by the following expression (1).

$$\Delta c = \{ (n_{co}^2 - n_o^2) / 2n_{co}^2 \} \times 100 \tag{1}$$

where the refractive index of the core is $n_{co}$, and the refractive index of pure quartz is $n_o$.

In this embodiment, a first long period grating in which change in grating period is about 445 $\mu$m is formed in the above optical fiber. The first long period grating serves as the first temperature dependent gain compensation region. Also, a second long period grating in which change in grating period is about 415 $\mu$m is formed in the above optical fiber. The second long period grating serves as the second temperature dependent gain compensation region. As described above, the first long period grating and the second long period grating are different in grating period from each other.

Also, the length of the first long period grating in the longitudinal direction is set to about 35 mm. The length of the second long period grating in the longitudinal direction is set to about 12.5 mm. Thus, the length of the first long period grating in the longitudinal direction is longer than the length of the second long period grating in the longitudinal direction.

The conditions of irradiating an ultraviolet ray in manufacturing the first and second long period gratings are the following same conditions. That is, after a high-pressure hydrogen treatment is conducted at 15 MPa for 3 weeks, a second harmonic is irradiated onto the single mode optical fiber of the above structure by an argon laser that generates the second harmonic. In this way, the respective first and second long period gratings having the above-mentioned lengths are formed.

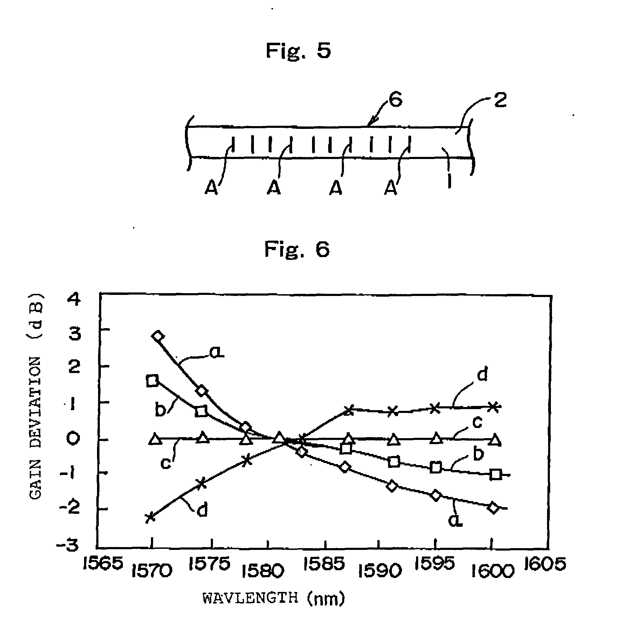

As well known, when an ultraviolet ray having a wavelength of about 240 nm is irradiated onto silica glass doped with germanium, there occurs a phenomenon called "photogractive effect" (that is, a phenomenon where a defect occurs in the lattice of the glass to raise the refractive index). The above grating is manufactured by utiliing the above phenomenon. That is, the ultraviolet beam is periodically irradiated along the longitudinal direction of the germanium doped core. As a result, for example, the refractive index of the core portion periodically rises to form the above grating (for example, Fig. 5 schematically shows a portion of the core where the refractive rises index by a line indicated by A). Also, the grating having the grating period (period change) of from about 100 $\mu$m to about 500 to 600 $\mu$m is called "long period grating".

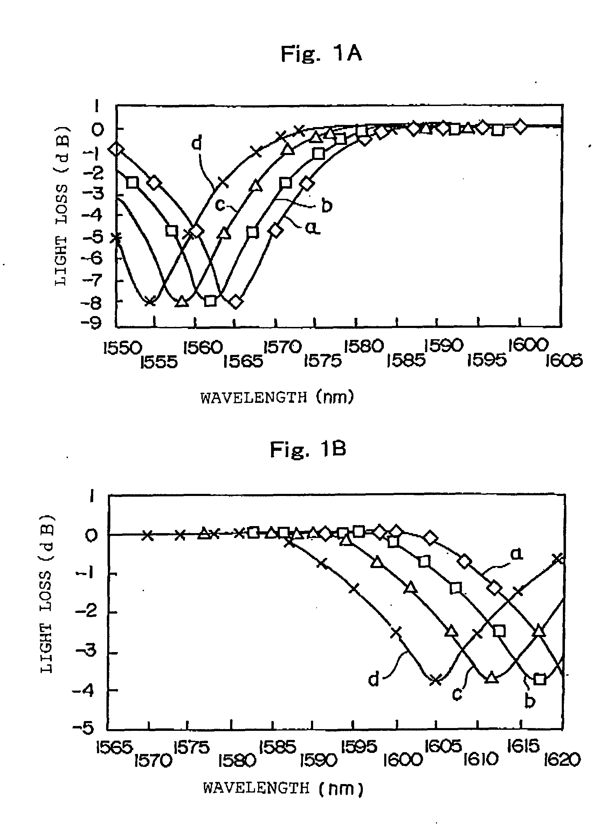

Fig. 1A shows the light transmission loss characteristic in the L-BAND of the above first long period grating by the light loss values. In Fig. IA, a characteristic line a indicates the light transmission loss characteristic of the first long period grating at 70°C. Also, a characteristic line b indicates the light transmission loss characteristic of the first long period grating at 50°C. Further, a characteristic line c indicates the light transmission loss characteristic of the first long period grating at 25°C. Still further, a characteristic line d indicates the light transmission loss characteristic of the first long period grating at -5°C.

Incidentally, the above first long period grating has the light transmission loss characteristic having a plurality of light transmission loss peaks of from a primary mode to an N-th order mode (N is an integer of 2 or more) which are different in wavelength from one anoher and which are caused by coupling of a propagation mode with a higher-order cladding mode through the long period grating. Among the inherent light transmission loss peaks of the above first long period grating, the light transmission loss peak wavelength of a predetermined set order mode (first long period grating set order mode) and the light transmission loss waveform having this light transmission loss peak wavelength are shown in Fig. 1A.

As shown in the characteristic lines a to d of Fig. lA, in the first long period grating, the peak wavelength of the light transmission loss waveform of the first long period grating set order mode is positioned on the shorter wavelength side than the transmission band (in this case, the above L-BAND (a wavelength of about 1570 nm to about 1600 nm)). Also, the light transmission loss peak wavelength (not shown) of an order mode subsequent to the first long period grating setting order is positioned on the longer wavelength side than the above L-BAND.

In addition, a band that compensates the temperature dependent gain characteristic of the optical amplifier by the first long period grating among the transmission band is about 1570 nm to about 1582 nm in wavelength. In a band (about 1582 nm to about 1600 nm in wavelength) on the longer wavelength side than the above band, the difference between the maximum value and the minimum value of the light transmission loss within an applied temperature range (in this case, -5°C to 70°C) is about 1 dB or less.

Also, as is apparent from the above characteristic lines a to d, the peak wavelength of the first long period grating set order mode and the light transmission loss waveform having this peak wavelength are shifted to the longer wavelength side as the temperature rises. As a result, in the optical component having the first long period grating according to this embodiment, the light transmission loss value on the shorter wavelength side of the transmission band increases as the temperature becomes higher. The peak wavelength of the first long period grating set order mode is about 1555 nm at -5°C, and about 1565 nm at 70°C, and the shift amount of the peak wavelength is about 0.13 nm/°C.

Fig. 1B shows the light transmission loss characteristic in the L-BAND of the above second long period grating by the light loss values. In Fig. 1B, a characteristic line a indicates the light transmission loss characteristic of the second long period grating at 70°C. Also, a characteristic line b indicates the light transmission loss characteristic of the second long period grating at 50°C. Further, a characteristic line c indicates the light transmission loss characteristic of the second long period grating at 25°C. Still further, a characteristic line d indicates the light transmission loss characteristic of the second long period grating at -5°C.

Incidentally, like the above first long period grating, the second long period grating has the light transmission loss characteristic having a plurality of light transmission loss peaks of from a primary mode to an N-th order mode (N is an integer of 2 or more) which are different in wavelength from one another which are caused by coupling of a propagation mode with a higher-order cladding mode through the long period grating. Among the inherent light transmission loss peaks of the above second long period grating, the light transmission loss peak wavelength of a predetermined set order mode (second long period grating set order mode) and the light transmission loss waveform having this light transmission loss peak wavelength are shown in Fig. 1B.

As is apparent from comparison of Fig. lA with Fig. 1B, the light transmission loss characteristic of the above first long period grating and the light transmission loss characteristic of the above second long period grating are different from each other.

Also, as shown in the characteristic lines a to d of Fig. 1B, in the second long period grating, the peak wavelength of the light transmission loss waveform of the second long period grating set order mode is positioned on the longer wavelength side than the transmission band (in this case, the above L-BAND (a wavelength of about 1570 nm to about 1600 nm)). Also, the light transmission loss peak wavelength (not shown) of an order mode preceding to the second long period grating setting order is positioned on the shorter wavelength side than the above transmission band.

In addition, a band in which the temperature dependent gain characteristic of the optical amplifier is to be compensated by the second long period grating in the transmission band is about 1582 nm to about 1600 nm in wavelength. In a band (about 1570 nm to about 1582 nm in wavelength) on the shorter wavelength side than the above band, the difference between the maximum value and the minimum value of the light transmission loss within an applied temperature range is about 1 dB or less.

Also, similar to the peak wavelength of the first long period grating set order mode and the light transmission loss waveform having the peak wavelength, the peak wavelength of the second long period grating set order mode and the light transmission loss waveform having the peak wavelength are shifted to the longer wavelength side as the temperature rises. As a result, in the optical component having the second long period grating according to this embodiment, the light transmission loss value on the longer wavelength side of the transmission band increases as the temperature becomes lower. The peak wavelength of the second long period grating set order mode is about 1605 nm at -5°C, and about 1618 nm at 70°C, and the shift amount of this peak wavelength is about 0.17 nm/°C.

The optical component of this embodiment includes a first temperature dependent gain compensation region having the above first long period grating and a second temperature dependent gain compensation region having the above second long period grating. From this fact, the light transmission loss value on the shorter wavelength side (a wavelength of about 1570 nm to about 1582 nm) of the transmission band (L-BAND) increases as the temperature becomes higher. Also, the light transmission loss value on the longer wavelength side (a wavelength of about 1582 nm to about 1600 nm) of the transmission band increases as the temperature becomes lower. With the above structure, the temperature dependent gain characteristics in the gain compensation band of the EDFA on the shorter wavelength side of the transmission band and in the gain compensation band of the EDFA on the longer wavelength side of the transmission band can be compensated.

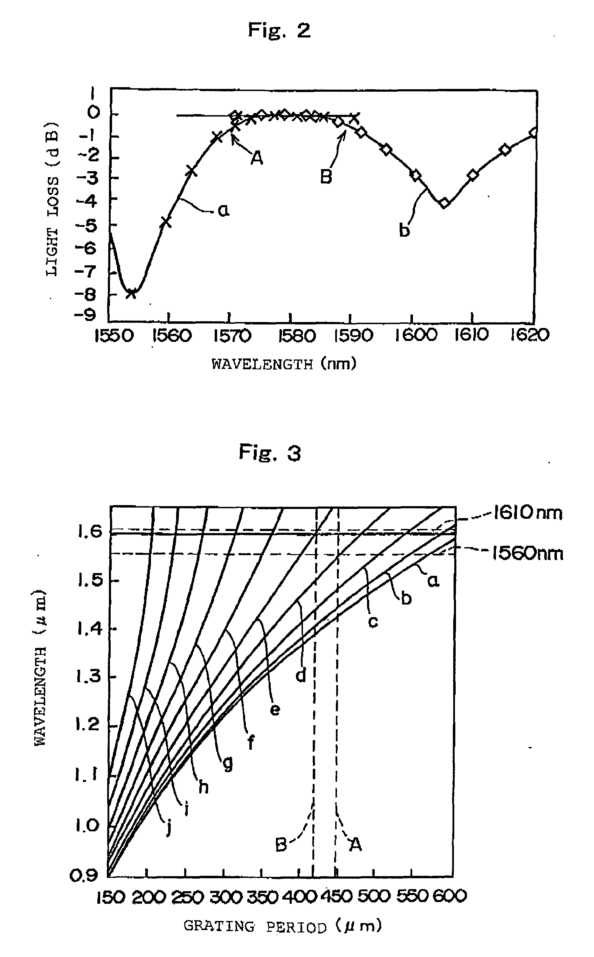

Also, in Fig. 2, the characteristic line a indicates the peak wavelength of the light transmission loss waveform at the above first long period grating set order mode and the characteristic of the waveform having this peak wavelength at -5°C. Also, in Fig. 2, the characteristic line b exhibits the peak wavelength of the light transmission loss waveform at the above second long period grating set order mode and the characteristic of the waveform having this peak wavelength at -5°C.

The magnitude of the peak wavelength of the characteristic a in Fig. 2 is about twice as large as the magnitude of the peak wavelength of the characteristic line b. Also, the inclination of a bottom portion (a portion A in the figure) in the light transmission loss waveform having the peak wavelength of the characteristic line a in Fig. 2 is about twice as large as the inclination of a bottom portion (a portion B in the figure) in the light transmission loss waveform having the peak wavelength of the characteristic line b. That is, as shown in Fig. 2, the magnitude of the peak wavelength of the light transmission loss waveform at the first long period grating set order mode and the inclination of the bottom portion A of the waveform having this peak wavelength are about twice as large as the magnitude of the peak wavelength of the light transmission loss waveform at the second long period grating set order mode and the inclination of the bottom portion B of the waveform having that peak wavelength.

As described above, in this embodiment, the first long period grating and the second long period grating are different in light transmission loss characteristic from each other. That is, the characteristic shown in Fig. 8, i.e., the temperature dependent gain characteristic of the EDFA in the L-BAND (a wavelength of about 1570 nm to about 1600 nm) can be substantially completely compensated on both of the shorter wavelength side and the longer wavelength side of the transmission band.

In this embodiment, because of the above light transmission loss characteristic, portions 6 for forming the first and second long period gratings are coated with a resin 1 that is -0.5 x $10^{-4}$/°C or lower in temperature coefficient of the refractive index, as shown in Fig. 5. As a result, with the respective light transmission loss characteristics of the above first and second long period gratings, the shift amount of the peak wavelength at the first long period grating set order mode can be set to about 0.13 nm/°C, and the shift amount of the peak wavelength at the second long period grating set order mode can be set to about 0.17 nm/°C.

The above resin 1 is an ultraviolet setting resin mainly containing acrylic therein (refer to OFC' 99 144/ThJ5 "Temperature-sensitive long-period fiber gratings for wide band tunable filters").

As described above, in this embodiment, the grating period of the first long period grating is set to about 445 μm, and the grating period of the second long period grating is set to about 415 μm. In the optical fiber formed with the long period grating of such a period, if the above resin 1 is not applied to the grating, the temperature dependency of the light transmission loss peak wavelength formed, for example, within a range of from 1550 nm to 1620 nm in wavelength is about 0.04 nm/°C, which is caused by coupling the propagation mode with the higher-order cladding mode through the long period grating.

However, in this embodiment, the above resin 1 has the temperature coefficient of negative refractive index which is -0.5 x $10^{-4}$/°C or lower in temperature coefficient of the refractive index as mentioned above. When the above resin 1 is used to cover the grating forming portions 6, the temperature shift amount of the light transmission loss peak wavelength can be set to about 0.13 to about 0.17 nm/°C.

Incidentally, the present inventors conducted the following investigation in order that the above characteristics are given to the first long period grating and the second long period grating. Upon this investigation, the present inventors first analyzed the gain characteristic of the EDFA to be compensated by the optical component of the present invention as follows:

As described above, the EDFA has the temperature dependent gain characteristic of the EDFA in the L-BAND is as shown in Fig. 8. In order to clarify the characteristic, the gain characteristics of the EDFA in the L-BAND at 70°C, 50°C and -5°C are obtained as the gain deviation using as reference the gain characteristic of the EDFA in the L-BAND at 25 °C that is room temperature (the gain deviation thereof is 0). The results are shown in Fig. 6.

As is apparent from Fig. 6, in a wavelength of 1570 nm to 1582 nm, the gain deviation at -5°C is a minus value. In a wavelength of 1582 nm to 1600 nm, both of the gain deviation at 50°C and the gain deviation at 70°C are minus values.

The present inventors have paid attention to a long period grating obtained by forming a grating with a long period in the optical fiber that is generally used for optical communication and that is small in size and easy to handle. The present inventors consider compensating the gain temperature of the EDFA in the L-BAND by using this long period grating. As well known, the light transmission loss characteristic of the long period grating has a loss waveform with the light transmission loss peak wavelength as a center. For that reason, the gain of the optical amplifier such as the EDFA cannot be increased by the long period grating.

Therefore, it is improper to apply a manner in which, as shown in Fig. 6, the gain characteristics of the EDFA in the L-BAND at 70°C, 50°C and -5°C are obtained as the gain deviation using as reference the gain characteristic of the EDFA in the L-BAND at 25 °C that is room temperature (the gain deviation thereof is 0), so that the gain deviation thus obtained is compensated.

To be specific, in the case where the gain temperature of the SOFA is compensated by the long period grating with the application of the above manner, the temperature dependent gain characteristic of the EDFA in the temperature range of, for example, from -5°C to 70°C can not accurately be compensated. For that reason, in a wavelength of 1570 nm or a wavelength of 1600 nm, a gain deviation of about 2 dB is left uncompensated.

Under the above circumstances, in order to substantially perfectly conduct the gain temperature compensation of the EDFA by using the long period grating, the present inventor set the characteristics at 25°C, 50°C and 70°C when using as reference the characteristic line d at -5°C (the gain deviation thereof is 0) in the shorter wavelength side of the transmission band (in this case, a wavelength of from 1570 nm to 1582 nm) to the characteristic line c, the characteristic line b and the characteristic line a, respectively, as shown in Fig. 7. Also, in the longer wavelength side of the transmission band (in this case, a wavelength of from 1582 nm to 1600 nm), the characteristics at -5°C, 25°C and 50°C when using as reference the characteristic line a at 70°C (the gain deviation thereof is 0) are set to the characteristic line d, the characteristic line c and the characteristic line b, respectively. Then the gain deviations are obtained.

In other words, the gain on the shorter wavelength side (in this case, a wavelength of 1570 nm to 1582 nm) of the transmission band at the low temperature reference temperature (in this case, -5°C) in the lower temperature region is set as the low temperature reference gain. The gain deviation resulting from subtracting the above low temperature reference gain from the gain on the shorter wavelength side of the transmission band at a higher temperature than -5°C that is the above low temperature reference temperature is obtained. Also, the gain on the longer wavelength side (in this case, a wavelength of 1582 nm to 1600 nm) of the transmission band at the high temperature reference temperature (in this case, 70°C) in the higher temperature region is set as the high temperature reference gain. The gain deviation resulting from subtracting the above high temperature reference gain from the gain on the longer wavelength side of the transmission band at a lower temperature than 70°C that is the above high temperature reference temperature is obtained.

That is, the gain deviation is obtained for each of the shorter wavelength side and the longer wavelength side of the transmission band using as the reference temperature the temperature of when the gain is smallest. For that reason, there is no case in which the gain deviation takes a minus value. If the gain deviation obtained with the gain characteristic at -5°C as reference in a wavelength of 1570 nm to 1582 nm is compensated and the gain deviation obtained with the gain characteristic at 70°C as reference in a wavelength of 1582 nm to 1600 nm is compensated, on the basis of the results shown in Fig. 7, the gain temperature of the EDFA is completely compensated in a wavelength of 1570 nm to 1600 nm.

In other words, the gain deviation is obtained for each of the shorter wavelength side and the longer wavelength side of the transmission band using as the reference temperature a temperature of when the gain is smallest among the temperatures that can be assumed or specified. For that reason, there is no case in which the gain deviation takes a minus value, and the gain deviation can be compensated physically as a loss.

Also, when the inclination of the gain deviation obtained with the gain characteristic at -5°C as reference in a wavelength of 1570 nm to 1582 nm is compared with the inclination of the gain deviation obtained with the gain characteristic at 70°C as reference in a wavelength of 1582 nm to 1600 nm, it is found from Fig. 7 that the former is about twice as large as the latter.

Therefore, the present inventors have thought of giving different characteristics to the temperature dependent gain compensation region (that is, a first temperature dependent gain compensation region) that compensates the gain deviation obtained on the basis of the gain characteristic at -5°C in a wavelength of 1570 nm to 1582 nm and the temperature dependent gain compensation region (that is, a second temperature dependent gain compensation region) that compensates the gain deviation obtained on the basis of the gain characteristic at 70°C in a wavelength of 1582 nm to 1600 nm.

The present inventors have thought of forming the above first temperature dependent gain compensation region from the first long period grating as follows. That is, when the gain of the EDFA at -5°C in a wavelength of 1570 nm to 1582 nm is set as the low temperature reference gain, the gain deviation resulting from subtracting the low temperature reference gain from the gain of the EDFA in a wavelength of 1570 nm to 1582 nm at a temperature higher than -5°C is compensated by the first long period grating.

On the other hand, when the gain of the EDFA at 70°C in a wavelength of 1582 nm to 1600 nm is set as the high temperature reference gain, the gain deviation resulting from subtracting the high temperature reference gain from the gain of the EDFA in a wavelength of 1582 nm to 1600 nm at a temperature lower than 70°C is compensated by the second long period grating.

Incidentally, even if the optical fiber is an optical fiber generally called "a single mode optical fiber, it is not strictly the single mode because the thickness of the cladding is definite. Even in the case of the single mode optical fiber, there exist a large number of higher-order modes ($HE_{12}$, $HE_{13}$, ..., $HE_{1m}$, etc.) where the enclosure of light is insufficient and the light is immediately attenuated, in addition to a mode ($HE_{11}$) that propagates the core. The higher-order modes are called "cladding modes".

When the long period grating is formed in the optical fiber, a peculiar light transmission loss characteristic can be given to the optical fiber. The light transmission loss characteristic is a characteristic that has a plurality of light transmission loss peaks of from a primary mode to an N-th order mode (N is an integer of 2 or more) which are different in wavelength from each other and which are caused by coupling of a propagation mode with a higher-order cladding mode through the long period grating of the optical fiber.

If the grating period (a change in period) is set to a period within a range of from 100 μm to about 500 to 600 μm, the power of the waveguide mode of the optical fiber can be coupled with the cladding mode. Most of the power coupled with the cladding mode becomes a loss as it is. For that reason, the light transmission loss peak wavelength can be provided by forming the long period grating as described above. As a result, the long period grating has a function of a non-reflective filter element, unlike the case of a short period grating. Therefore, the long period grating also has a function of suppressing an ASE (amplified spontaneous emission) light of the EDFA.

A plurality of light transmission loss peak wavelengths (center wavelengths) λc of from the primary mode to the N-th order mode can be represented by the following expression (2). In the expression (2), the period of the grating is $\Lambda$, the effective refractive index of the propagation mode in the core is $n_{co}$, and the effective refractive index of the cladding mode of n-th order (n is an integer of 1 or more) is $n_{cl}^{(n)}$.

$$\lambda c = \Lambda(n_{c0} - n_{cl}^{(n)}) \tag{2}$$

In the expression (2), when the light transmission loss peak wavelength of the primary mode is obtained, n of $n_{cl}^{(n)}$ is 1, and when the light transmission loss peak wavelength of an n-th order mode is obtained, n of $n_{cl}^{(n)}$ is N.

The effective refractive index of the propagation mode in the core and the effective refractive index of the cladding mode are determined by the composition of the core and cladding, or other factors, respectively. For that reason, if at least one of the composition of the optical fiber and the grating period is variously set, the plurality of light transmission loss peak wavelengths of from the primary mode to the N-th order mode can be determined.

The primary mode is a coupling wavelength in which a basic mode (propagation mode) $HE_{11}$ is coupled with a higher-order mode $HE_{12}$. A secondary mode is a coupling wavelength in which the basic mode $HE_{11}$ is coupled with a higher-order mode $HE_{13}$, a third-order mode is a coupling wavelength in which the basic mode $HE_{11}$ is coupled with a higher-order mode $HE_{14}$, and an n-th order mode is a coupling wavelength in which the basic mode $HE_{11}$ is coupled with a higher-order mode $HE_{1m}$ (in this case, m = n+1).

Fig. 3 schematically shows a relation between the period of the grating formed in the optical fiber and the coupling wavelength of the optical fiber when the composition of the optical fiber is not changed. Since the coupling wavelengths indicated by the characteristic lines a to j in Fig. 3 are wavelengths that are peak values of the light transmission loss, the above coupling wavelengths are called herein "light transmission loss peak wavelengths of from the primary mode to the N-th order mode (in this example, N = 10)". Also, Fig. 3 shows the light transmission loss peaks of the primary mode, secondary mode, third-order mode, ... tenth -order mode from the right hand of the figure. Specifically, the characteristic line a is the primary mode, the characteristic line b is the secondary mode, the characteristic line c is the third-order mode, and the characteristic line d is the fourth-order mode in Fig. 3. The values shown in Fig. 3 are values at 25°C.

As shown in Fig. 3, the grating period formed in the optical fiber (fiber grating period) is set to, for example, 150 μm to about 580 μm. As a result, the light transmission loss peak wavelength of plural-order modes can be formed within a range of from 0.9 μm (900 nm) to 1.6 μm (1600 nm) in wavelength. Also, the peak wavelengths of the respective order modes at 25°C can be arbitrarily determined by changing the grating period.

Under the above circumstances, the present inventors have first conducted an investigation on the period of the grating formed in the single mode optical fiber and the set order mode so that the characteristic of the first long period grating that forms the first temperature dependent gain compensation region has the following characteristic.

That is, among the above plurality of light transmission loss peaks formed by the first long period grating, the light transmission loss peak wavelength of a predetermined first long period grating set order mode is on the shorter wavelength side than the transmission band (the above L-BAND), and the light transmission loss peak wavelength of an order mode subsequent to the above set order is on the longer wavelength side than the transmission band, and the difference between the maximum value and the minimum value of the light transmission loss within the applied temperature range is about 1 dB or less in, of the transmission band, a band on the longer wavelength side than the band (a wavelength of about 1570 nm to about 1582 nm) in which the temperature dependent gain characteristic of the EDFA is to be compensated by the first long period grating.

As a result, the present inventors have found out the following facts. That is, when the grating period is about 445 μm, the light transmission loss peak wavelength of the primary mode (the light transmission loss peak wavelength of this mode is a wavelength at a point where the broken line A and the characteristic line a cross each other) to the light transmission loss peak wavelength of the fourth-order mode (the light transmission loss peak wavelength of this mode is a wavelength at a point where the broken line A and the characteristic line d cross each other) are formed with intervals at points where a broken line A crosses the respective characteristic lines a to d in Fig. 3. When the first long period grating set order mode is the fourth-order mode, the light transmission loss peak wavelength of the fourth-order mode is about 1560 nm.

Then, the light transmission loss peak wavelength of the fifth-order mode that is an order mode subsequent to the first long period grating set order mode is on the longer wavelength side than 1600 nm. Moreover, on the longer wavelength side (about 1582 nm to 1600 nm) of a band in which the temperature dependent gain characteristic of the EDFA is to be compensated by the first long period grating in the above transmission band, the difference between the maximum value and the minimum value of the light transmission loss characteristic is about 1 dB or less, and the light transmission loss is almost flat. The present inventors have found out the above fact.

In the case where the light transmission loss peak wavelength is formed in the vicinity of a wavelength of 1560 nm, all of the characteristic lines a to j shown in Fig. 3 have points at which the lines cross the wavelength 1.56 μm (1560 nm). Accordingly, when the set order mode is determined in accordance with a period value of the grating, even if the grating period value is other than about 445 μm, the long period grating having the light transmission loss peak wavelength in the vicinity of a wavelength of 1560 nm can be formed.

However, if the grating period is set to a value that causes, for example, a wavelength of 1560 nm to cross the characteristic line j (the characteristic line of the tenth-order mode), there arises the following problem. The problem is that since the inclination of the characteristic line j is sharp, there is a fear that a value of the light transmission loss peak wavelength is largely shifted due to an error in formation of the grating period. As a result, it becomes difficult to improve the yield of the first long period grating.

Also, if a change in grating period is set to a large value of, for example, about 550 μm or more, since the characteristic line a (the characteristic line of the primary mode) which crosses a wavelength of 1560 nm is close to the subsequent characteristic line b (the characteristic line of the secondary mode), the light transmission loss peak wavelength of the subsequent mode is undesirably formed in the vicinity of a wavelength of 1570 nm. Therefore, in the case where the light transmission loss on the longer wavelength side (a wavelength of 1582 to 1600 nm) of the transmission band is intended to be substantially flat when the transmission band is 1570 nm to 1600 nm as in this embodiment, it is not preferable to set the grating period of the first long period grating to be larger than 445 μm in Fig. 3.

Therefore, in this embodiment, taking the easiness in manufacturing the long period grating and the transmission band into consideration, the grating period of the first long period grating is set to about 445 μm, and the first long period grating set order mode is set to the fourth-order mode as described above.

Also, the present inventors have studied the period of the grating formed in the single mode optical fiber and the set order mode so that the second long period grating characteristic that forms the second gain temper compensation region has the following characteristic.

That is, among a plurality of light transmission loss peaks of the light transmission loss characteristic formed by the second long period grating, the light transmission loss peak wavelength of a predetermined second long period grating set order mode is on the longer wavelength side than the transmission band (the above L-BAND), the light transmission loss peak wavelength of an order mode preceding to the above set order is on the shorter wavelength side than the transmission band, and the difference between the maximum value and the minimum value of the light transmission loss within the applied temperature range is about 1 dB or less in, of the above transmission band, the shorter wavelength side band than the band (a wavelength of about 1582 nm to about 1600 nm) in which the temperature dependent gain characteristic of the EDFA is compensated by the second long period grating.

As a result, the present inventors have found out the following facts. That is, when the grating period is set to about 415 μm, the light transmission loss peak wavelength of the primary mode (the light transmission loss peak wavelength of this mode is a wavelength at a point where the broken line B and the characteristic line a cross each other) to the light transmission loss peak wavelength of the fifth-order mode (the light transmission loss peak wavelength of this mode is a wavelength at a point where the broken line B and the characteristic line e cross each other) are formed at points where the broken line B crosses the respective characteristic lines a to e in Fig. 3. When the second long period grating set order mode is the fifth-order mode, the light transmission loss peak wavelength of the fifth-order mode is about 1610 nm.

Also, the light transmission loss peak wavelength of the fourth-order mode that is an order mode preceding to the second long period grating set order mode is on the shorter wavelength side than 1570 nm. Moreover, on the shorter wavelength side (about 1570 nm to 1582 nm) of a band in which the temperature dependent gain characteristic of the EDFA is to be compensated by the second long period grating in the above transmission band, the difference between the maximum value and the minimum value of the light transmission loss characteristic is about 1 dB or less, and the light transmission loss is almost flat. The present inventors have found out the above fact.

In the case where the light transmission loss peak wavelength is to be formed in the vicinity of a wavelength of 1610 nm, all of the characteristic lines a to j shown in Fig. 3 have points where the lines cross the wavelength 1.61 $\mu$m (1610 nm). As a result, when the set order mode is determined in accordance with a period value of the grating and the grating period is set to various values, the long period grating having the light transmission loss peak wavelength in the vicinity of a wavelength of 1610 nm can be formed.

However, for the same reason as that for determining the structure of the above first long period grating, in this embodiment, it is preferable to set the grating period of the second long period grating to about 415 $\mu$m. For that reason, the grating period of the second long period grating is set to about 415 $\mu$m, and the second long period grating set order mode is set to the fifth-order mode.

Also, there has been known that, in the long period grating, the magnitude of the light transmission loss peak wavelength and the inclination of the bottom portion of the waveform having this light transmission loss peak wavelength (for example, portions indicated by A and B in Fig. 2) vary in accordance with the length of the long period grating in the longitudinal direction. That is, the magnitude of the light transmission loss peak wavelength and the inclination of the bottom portion of the waveform having the light transmission loss peak wavelength become larger as the length of the long period grating in the longitudinal direction becomes longer.

In this embodiment, as described above, the magnitude of the peak wavelength of the light transmission loss waveform at the first long period grating set order mode and the inclination of the bottom portion of the waveform having this peak wavelength are about twice as large as the magnitude of the peak wavelength of the light transmission loss waveform at the second long period grating set order mode and the inclination of the bottom portion of the waveform having that peak wavelength. For that reason, the first and second long period gratings were sampled (including simulation) while the length of the first and second long period gratings in the longitudinal direction are variously changed.

The present inventors have studied the long period grating of which length provides the peak wavelength of the light transmission loss waveform and the waveform having that peak wavelength which are suitable to compensate the temperature dependent gain characteristic of the EDFA in the L-BAND among the sample first and second long period gratings. As a result of this investigation, the present inventors have found that it is preferable that the length of the first long period grating in the longitudinal direction be set to 35 $\mu$m, and the length of the second long period grating in the longitudinal direction be set to 12.5 $\mu$m. Therefore, in this embodiment, the length of the first long period grating in the longitudinal direction is set to 35 $\mu$m, and the length of the second long period grating in the longitudinal direction is set to 12.5 $\mu$m.

Also, the present inventors have studied the temperature dependent shift characteristic of the light transmission loss peak wavelengths of the first and second long period gratings. The temperature dependent shift characteristic of the light transmission loss characteristic of the optical component with long period gratings formed therein is represented by the following expression (3), The expression (3) can be obtained by differentiating the above expression (2) by a temperature T.

$$d\lambda c/dT = \{(n_{co} - n_{cl}^{(n)})d\Lambda/dT\} + \Lambda\{(n_{co}/dT) - (n_{cl}^{(n)}/dT)\} \tag{3}$$

where since $d\Lambda/dT$ 0, the expression (3) can be approximated by the following expression (4).

$$d\lambda c/dT = \Lambda\{(n_{co}/dT) - (n_{cl}^{(n)}/dT)\} \tag{4}$$

Accordingly, it can be understood that the temperature dependent shift characteristic of the N-th order light transmission loss peak wavelength is derived from the difference between the effective refractive index of the propagation mode in the core and the effective refractive index of the n-th order cladding mode (in this example, n = N). The temperature dependent shift characteristic of the primary light transmission loss peak wavelength is derived from the difference between the effective refractive index of the propagation mode in the core and the effective refractive index of the primary cladding mode. The temperature dependent shift characteristics of the N-th order light transmission loss peak wavelengths vary depending on the order of the cladding mode.

Also, in the case where the optical fiber that constitutes the optical component is a single mode optical fiber having the above specific refractive index difference $\Delta c$ as in this embodiment, $(n_{c0}/dt) > (N_{cl}^{(n)}/dT$ is satisfied. For that reason, the respective primary to the N-th order light transmission loss peak wavelengths are shifted to the longer wavelength side as the temperature rises.

As described above, setting the grating period to about 445 $\mu$m, and the set order mode to the fourth-order mode, the temperature dependent shift characteristic of the light transmission loss peak wavelength (about 1560 nm) of the fourth-order mode in the first long period grating is obtained from the above expression (4). Also, setting the grating period to about 415 $\mu$m, and the set order mode to the fifth-order mode, the temperature dependent shift characteristic of the light transmission loss peak wavelength (about 1610 nm) of the fifth-order mode in the second long period grating is obtained from the above expression (4). It is found that both of the values thus obtained are about 0.04 nm/$^\circ$C.

The value of the temperature dependent shift characteristic is not proper as the characteristic for compensating the gain temperature dependency characteristic of the EDFA in the L-BAND. The reason is that in order to compensate the gain temperature dependency characteristic of the EDFA in the L-BAND, there are required the temperature dependent gain compensation regions having the temperature dependency of the light transmission loss characteristics of the first and second long period gratings according to this embodiment. As described above, the temperature dependent shift characteristic of the light transmission loss characteristic shown in Fig. 1A is about 0.13 nm/$^\circ$C, and the temperature dependent shift characteristic of the light transmission loss characteristic shown in Fig. 1B is about 0.17 nm/$^\circ$C.

The present inventors have paid attention to the following fact. That is, in order to set the temperature dependent shift characteristics of the light transmission loss characteristics of the first and second long period gratings to proper values, for example, as shown in Fig. 5, a resin 1 (having a temperature coefficient negative in refractive index as the temperature coefficient of the refractive index) is used to cover the portions 6 for forming the gratings. As a result, the temperature dependent shift characteristics of the light transmission loss characteristics of the long period gratings can be changed. The present inventors have paid attention to the above fact.

In this embodiment, the temperature coefficient of the refractive index of the resin 1 is set to -0,5 x 10$^{-4}$/$^\circ$C or less. With the resin 1 being applied to the portions 6 for forming the first and second long period gratings, the temperature dependent shift characteristics of the light transmission loss peak wavelengths of the set order modes in the light transmission loss characteristics of the first and second long period gratings are respectively set to the above values (the value in the first long period grating is set to about 0.13 nm/$^\circ$C, and the value in the second long period grating is set to about 0.17 nm/$^\circ$C.).

In this embodiment, the structures of the first long period grating and the second long period grating are determined on the basis of the above study, and the resin 1 is coated on the portions 6 for forming those first and second long period gratings, to thereby constitute the optical component, In the optical component thus structured, the gain temperature dependency characteristic of the EDFA on the shorter wavelength side of the L-BAND is compensated by the first long period grating, and the gain temperature dependency characteristic of the EDFA on the longer wavelength side of the L-BAND is compensated by the second long period grating.

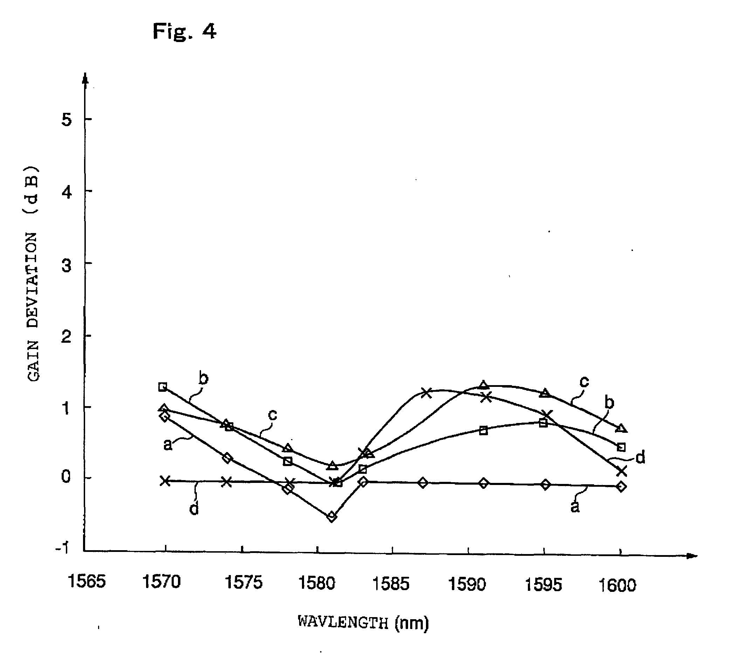

The optical component of this embodiment is combined with the EDFA to obtain the gain temperature dependency in the L-BAND. As a result, as shown in Fig. 4, the gain temperature dependency within the temperature range of from -5$^\circ$C to 70$^\circ$C can be about 1 dB or less over the entire transmission band (L-BAND).

According to this embodiment, a first long period grating whose grating period is about 445 $\mu$m and a second long period grating whose grating period is about 415 $\mu$m are formed in the above single mode optical fiber on the basis of the above study result. The above first long period grating compensates the gain of the EDFA on the shorter wavelength side (a wavelength of 1570 nm to 1582 nm) of the above L-BAND in the higher temperature region. Also, the above second long period grating compensates the gain of the EDFA on the longer wavelength side (a wavelength of 1582 nm to 1600 nm) of the above L-BAND in the lower temperature region. With the above structure, the gain temperature dependency of the EDFA over the entire L-BAND can be compensated to about 1 dB or less within a range of from -5$^\circ$C to 70$^\circ$C.

The present invention is not limited to the above embodiment but can take various modes for carrying out the invention. For example, although the period of the first long period grating is set to about 445 $\mu$m, and the period of the second long period grating is set to about 415 $\mu$m in the above embodiment, the periods of the first and second long period gratings are not particularly limited, but may be appropriately set.

For example, in the case where the transmission band is set to 1570 to 1600 nm, the first long period grating is to have the light transmission loss peak wavelength in the vicinity of a wavelength 1560 nm on the shorter wavelength side than the transmission band, and the second long period grating is to have the light transmission loss peak wavelength in the vicinity of a wavelength 1610 nm on the longer wavelength side than the transmission band, all of the characteristic lines have points where the lines cross the wavelength 1.56 μ m (1560 nm) and points at which any characteristic lines cross the wavelength 1.61 μ m (1610 nm) in Fig. 3.

Accordingly, the set order mode is determined in accordance with the values of the respective grating periods of the first and second long period gratings. The first and second long period gratings thus can be constructed.

However, as described above, it is necessary to take into consideration the easiness in manufacturing the optical component, the broadness of the transmission band, and the like. For that reason, in the case of compensating the gain temperature dependency characteristic of the EDFA having the gain temperature dependency characteristic as the one shown in Fig. 8, it is preferable to set the periods of the first and second long period gratings to the different values as in the above embodiment.

Also, in the above embodiment, the temperature dependent shift characteristic of the peak wavelength of the first long period grating set order mode formed on the shorter wavelength side of the L-BAND is set to about 0.13 nm/°C, and the temperature dependent shift characteristic of the peak wavelength of the second long period grating set order mode formed on the longer wavelength side of the L-BAND is set to about 0.17 nm/°C. However, those temperature dependent shift characteristics are not particularly limited to this, but are appropriately set.

In other words, those temperature dependent shift characteristics are set in accordance with an optical amplifier whose temperature dependent gain characteristic is to be compensated by the optical component of the present invention. For example, the temperature dependent shift characteristics of the above light transmission loss peak wavelengths are set to 0.05 nm/°C or more (preferably, 0.1 to 0.3nm/°C). As a result, the temperature dependent gain characteristic of an appropriate optical amplifier such as the EDFA can be compensated.

In addition, in the above embodiment, the resin 1 that is -0.5 x $10^{-2}$/°C or less in temperature coefficient of the refractive index is used to cover the portions 6 for forming the first and second long period gratings, whereby the temperature dependent shift characteristic of the light transmission loss peak wavelength at the respective set order modes in the light transmission loss characteristics of the first and second long period gratings are set to the above values (the value in the first long period grating is set to about 0.13 nm/°C, and the value in the second long period grating is set to about 0.17 nm/°C.). However, the temperature coefficient of the refractive index of the resin 1 used to cover the portions for forming the first and second long period gratings is not particularly limited but is set to an appropriate negative value.

In other words, the temperature coefficient of the refractive index of the resin 1 is appropriately set in accordance with the required temperature dependent shift amount so that the light transmission loss peak wavelength in the respective set order modes in the light transmission loss characteristics of the first and second long period gratings are shifted by the required temperature dependent shift amount suitable to compensate the temperature dependent gain characteristic of an optical amplifier such as the EDFA.

In addition, in the above embodiment, the length of the first long period grating in the longitudinal direction is set to about 35 mm, and the length of the second long period grating in the longitudinal direction is set to about 12.5 mm. However, those lengths are not particularly limited, but are appropriately set.

For example, the length of the first long period grating in the longitudinal direction is set to about 20 to 50 mm, and the length of the second long period grating in the longitudinal direction is set to about 5 to 20 mm. In this way, the length of the first long period grating in the longitudinal direction is set to be longer than the length of the second long period grating in the longitudinal direction. With this structure, as in the above embodiment, when the rate of compensating the temperature dependent gain characteristic of the optical amplifier on the shorter wavelength side of the transmission band is larger than the rate of compensating the temperature dependent gain characteristic of the optical amplifier on the longer wavelength side of the transmission band, the temperature dependent gain characteristic of the optical amplifier can be appropriately compensated over the entire gain compensation band of the transmission band.

Contrary to the above embodiment, the length of the first long period grating in the longitudinal direction may also be set to be shorter than the length of the second long period grating in the longitudinal direction. with this structure, contrary to the above embodiment, the temperature characteristic of the first long period grating can be made smaller than the temperature characteristic of the second long period grating. For that reason, when the rate of compensating the temperature dependent gain characteristic of the optical amplifier on the longer wavelength side of the transmission band is larger than the rate of compensating the temperature dependent gain characteristic of the optical amplifier on the shorter wavelength side of the transmission band, the temperature dependent gain characteristic of the optical amplifier can be appropriately compensated over the entire gain compensation band of the transmission band.

When the temperature dependent gain characteristic of the optical amplifier is to be compensated by the light transmission loss characteristics of the first and second long period gratings, the magnitude of the light transmission loss peak wavelength and the inclination of the bottom portion of the light transmission loss waveform including this light transmission loss peak wavelength, as well as the temperature dependent shift characteristic of the light transmission loss peak wavelength, are appropriately set in accordance with the temperature dependent gain characteristic of the optical amplifier to be compensated. The temperature dependent gain characteristic of the optical amplifier can thus be compensated.

Accordingly, the lengths of the first and second long period gratings in the longitudinal direction are determined in accordance with the temperature dependent shift characteristic of the light transmission loss peak wavelength, so that the magnitude of the light transmission loss peak wavelength and the inclination of the bottom portion of the light transmission loss waveform including this light transmission loss peak wavelength take appropriate values that suite the temperature dependent shift characteristic of the light transmission loss peak wavelength.

The adverse influence of the fluctuation of a laser power when irradiating the ultraviolet ray during manufacturing is smaller as the lengths of the first and second long period gratings in the longitudinal direction are made shorter. Since this improves the manufacture yield, it is desirable to make the lengths of the first and second long period gratings in the longitudinal direction as short as possible.

In addition, as is shown in the above expressions (2) and (4), the light transmission loss peak wavelengths of the primary mode to the N-th order mode and their temperature dependent shift characteristics also change depending on the effective refractive index of the propagation mode in the core. As a result, the light transmission loss peak wavelengths of the primary mode to the N-th order mode in the respective inherent light transmission loss characteristics which are caused by the first and second long period gratings and their temperature dependent shift characteristics can be controlled by changing the effective refractive index of the propagation mode in the core. Therefore it is also possible to compensate the gain temperature dependency of an optical amplifier such as the EDFA in a wavelength of about 1570 nm to about 1600 nm to, for example, about 1 dB or less within the applied environmental temperature range by changing the effective refractive index of the propagation mode in the core.

In this case, in order to change the effective refractive index of the propagation mode in the core, for example, the amount of germanium used to dope the optical fiber is changed to change the specific refractive index difference A of the core. The refractive index of the core thus can be changed. It is also possible to change (increase, for example) the refractive index of the core by changing the amount of ultraviolet ray used to form the fiber grating.

In addition, in the above embodiment, in the first long period grating, in a band on the longer wavelength side than a band in which the temperature dependent gain characteristic of the optical amplifier is to be compensated by the first long period grating in the above transmission band, the difference between the maximum value and the minimum-value of the light transmission loss within the applied temperature range is about 1 dB or less. However, in the band on the longer wavelength side than the band in which the temperature dependent gain characteristic of the optical amplifier is to be compensated, the difference between the maximum value and the minimum value of the light transmission loss within the applied temperature range may be slightly larger than 1 dB. However, it is preferable that the difference is smaller because an influence on a band where the gain temperature compensation characteristic of the optical amplifier is not compensated by the first long period grating is small.

Likewise, in the above embodiment, in the second long period grating, in a band on the shorter wavelength side than a band in which the temperature dependent gain characteristic of the optical amplifier is to be compensated by the second long period grating in the above transmission band, the difference between the maximum value and the minimum value of the light transmission loss within the applied temperature range is about 1 dB or less. However, in the band on the shorter wavelength side than the band in which the temperature dependent gain characteristic of the optical amplifier is to be compensated, the difference between the maximum value and the minimum value of the light transmission loss within the applied temperature range may be slightly larger than 1 dB. However, as in the above description, it is preferable that the difference is smaller because an influence on a band where the gain temperature compensation characteristic of the optical amplifier is not compensated by the second long period grating is small.

In addition, in the above embodiment, the transmission band is set to 1570 nm to 1600 nm. However, the transmission band is not particularly limited, but may be appropriately set in accordance with, for example, the wavelength band applied tothe wavelength division multiplexing transmission system.

In addition, in the above embodiment, the compensation band for the temperature dependent gain characteristic of the EDFA is set to about 1570 nm to about 1600 nm in adaptation to a case in which the EDFA is applied to the wavelength division multiplexing transmission system as the optical amplifier. However, this compensation band is not particularly limited, but may be appropriately set in accordance with, for example, an optical amplifier such as the EDFA which is applied to the wavelength division multiplexing transmission system and the wavelength division multiplexing transmission wavelength band, or the like.

In addition, the optical amplifier whose gain temperature dependency is to be compensated in accordance with the present invention is not necessarily limited to the EDFA, but may be of the rare earth element doped amplifier other than the EDFA, as long as the optical amplifier has the temperature dependent gain characteristic of the optical amplifier in which the gain on the shorter wavelength side of the transmission band in the higher temperature region is larger than the gain in the lower temperature region and the gain on the longer wavelength side of the transmission band in the lower temperature region is larger than the gain in the higher temperature region.

In addition, in the above embodiment, the first and second long period gratings are formed in the optical fiber 2 as optical waveguides. However, the optical component of the present invention may be structured, for example, such that at least one of the first and second long period gratings is formed in the optical waveguide formed in a planar optical waveguide circuit or the like.

In addition, in the above embodiment, the first temperature dependent gain compensation region that compensates the temperature dependent gain characteristic of the optical amplifier on the shorter wavelength side of the transmission band is formed of the first long period grating, and the second temperature dependent gain compensation region that compensates the temperature dependent gain characteristic of the optical amplifier on the longer wavelength side of the transmission band is formed of the second long period grating. However, the first and second temperature dependent gain compensation regions are not necessarily formed from the first and second long period gratings if the above gain temperature compensation structure is provided.

However, as in the above embodiment, if the first and second temperature dependent gain compensation regions are formed from the first and second long period gratings, it is possible to fabricate, readily and exactly as designed, the optical component that is capable of compensating the temperature dependent gain characteristic of the optical amplifier in the transmission band as shown in the above embodiment.

In addition, in the above embodiment, the first and second temperature dependent gain compensation regions are formed separately. However, the first temperature dependent gain compensation region may serve also as the second temperature dependent gain compensation region to provide a common temperature dependent gain compensation region, depending on the temperature dependent gain characteristic of the optical amplifier whose gain temperature is to be compensated by the optical component of the present invention. In this case, the optical component is so structured as to provide the characteristic in that the loss on the shorter wavelength side of the transmission band in a higher temperature region is larger than the loss in the lower temperature region, and the loss on the longer wavelength side of the transmission band in a lower temperature region is larger than the loss in the higher temperature region.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

**Claims**

1. An optical component comprising a structure of compensating a temperature dependent gain characteristic of an optical amplifier in which, in the gain on the shorter wavelength side of a transmission band of the optical amplifier, the gain in a higher temperature region is larger than that in a lower temperature region while, in the gain on the longer wavelength side of the transmission band, the gain in a lower temperature region is larger than that in a higher temperature region.

2. The optical component as claimed in claim 1, wherein said structure of compensating the temperature dependent gain characteristic of the optical amplifier comprises: a first temperature dependent gain compensation region that compensates the temperature dependent gain characteristic on the shorter wavelength side of the transmission band; and a second temperature dependent gain compensation region that compensates the temperature dependent gain characteristic on the longer wavelength side of the transmission band.

3. The optical component as claimed in claim 2, wherein, in the first temperature dependent gain compensation region, the gain of the optical amplifier at the temperature of a low temperature reference in a lower temperature region, which is smaller than the gain of the optical amplifier in a higher temperature region on the shorter wavelength side of the transmission band, is the gain of a low temperature reference, and a deviation of the gain of the optical amplifier at a high temperature on the shorter wavelength side of the transmission band is compensated on the basis of the gain of the low temperature reference, and

wherein, in the second temperature dependent gain compensation region, the gain of the optical amplifier at the temperature of a high temperature reference in a higher temperature region, which is smaller than the gain of the optical amplifier in a lower temperature region on the longer wavelength side of the transmission band, is the gain of a high temperature reference, and a deviation of the gain of the optical amplifier at a low temperature on the longer wavelength side of the transmission band is compensated on the basis of the gain of the high temperature reference.

4. The optical component as claimed in claim 2, wherein:

the first temperature dependent gain compensation region has a first long period grating that is formed in an optical waveguide formed of a core and a cladding;
the second temperature dependent gain compensation region has a second long period grating, which is formed in an optical waveguide formed of a core and a cladding, different in period from said first long period grating;
said first long period grating compensates the gain of the optical amplifier on the shorter wavelength side of the transmission band in the higher temperature region; and
said second long period grating compensates the gain of the optical amplifier on the longer wavelength side of the transmission band in the lower temperature region.

5. The optical component as claimed in claim 3, wherein:

the first temperature dependent gain compensation region has a first long period grating that is formed in an optical waveguide formed of a core and a cladding;
the second temperature dependent gain compensation region has a second long period grating, which is formed in an optical waveguide formed of a core and a cladding, different in period from said first long period grating;
said first long period grating compensates the gain of the optical amplifier on the shorter wavelength side of the transmission band in the higher temperature region; and
said second long period grating compensates the gain of the optical amplifier on the longer wavelength side of the transmission band in the lower temperature region.

6. The optical component as claimed in claim 4, wherein:

in said first long period grating, a peak wavelength of a waveform of a light transmission loss characteristic caused by said first long period grating is positioned on the shorter wavelength side than the transmission band;
in said second long period grating, a peak wavelength of a waveform of a light transmission loss characteristic caused by said second long period grating is positioned on the longer wavelength side than the transmission band, and
an amplitude waveform with respect to the wavelength of the light transmission loss characteristic of said first long period grating and an amplitude waveform with respect to the wavelength of the light transmission loss characteristic of said second long period grating are shifted depending on the temperature, whereby the light transmission loss on the shorter wavelength side of the transmission band increases as the temperature becomes higher whereas the light transmission loss on the longer wavelength side of the transmission band increases as the temperature becomes lower, thereby compensating the temperature dependent gain characteristic in a gain compensation band of the optical amplifier.

7. The optical component as claimed in claim 5, wherein:

in said first long period grating, a peak wavelength of a waveform of a light transmission loss characteristic caused by said first long period grating is positioned on the shorter wavelength side than the transmission band;
in said second long period grating, a peak wavelength of a waveform of a light transmission loss characteristic caused by said second long period grating is positioned on the longer wavelength side than the transmission band; and
an amplitude waveform with respect to the wavelength of the light transmission loss characteristic of said first long period grating and an amplitude waveform with respect to the wavelength of the light transmission loss characteristic of said second long period grating are shifted depending on the temperature, whereby the light transmission loss on the shorter wavelength side of the transmission band increases as the temperature becomes higher whereas the light transmission loss on the longer wavelength side of the transmission band increases as the temperature becomes lower, thereby compensating the temperature dependent gain characteristic in a gain compensation band of the optical amplifier.

8. The optical component as claimed in claim 4, wherein:

said first long period grating has a peak wavelength of the waveform of the light transmission loss characteristic on the shorter wavelength side than the transmission band;

the difference between the maximum value and the minimum value of the light transmission loss within the applied temperature range is about 1 dB or less in a band on the longer wavelength side than a band in which the temperature dependent gain characteristic of the optical amplifier is to be compensated, within the transmission band;

said second long period grating has a peak wavelength of the waveform of the light transmission loss characteristic on the longer wavelength side than the transmission band; and

the difference between the maximum value and the minimum value of the light transmission loss within the applied temperature range is about 1 dB or less in a band on the shorter wavelength side than a band in which the temperature dependent gain characteristic of the optical amplifier is to be compensated, within the transmission band.

9. The optical component as claimed in claim 7, wherein:

said first long period grating has a peak wavelength of the waveform of the light transmission loss characteristic on the shorter wavelength side than the transmission band;

the difference between the maximum value and the minimum value of the light transmission loss within the applied temperature range is about 1 dB or less in a band on the longer wavelength side than a band in which the temperature dependent gain characteristic of the optical amplifier is to be compensated, within the transmission band;

said second long period grating has a peak wavelength of the waveform of the light transmission loss characteristic on the longer wavelength side than the transmission band; and

the difference between the maximum value and the minimum value of the light transmission loss within the applied temperature range is about 1 dB or less in the shorter wavelength band than a band in which the temperature dependent gain characteristic of the optical amplifier is to be compensated, within the transmission band.

10. The optical component as claimed in claim 4, wherein:

each of said first and second long period gratings has an intrinsic light transmission loss characteristic having a plurality of light transmission loss peaks of from a primary mode to an n-th order mode (N is an integer of 2 or more) with a wavelength interval put between the peaks, the peaks being caused by coupling of a propagation mode with a higher-order cladding mode through the long period grating;

a period of said first long period grating is determined such that the light transmission loss peak wavelength of a predetermined set order mode among the intrinsic light transmission loss peaks is on the shorter wavelength side than the transmission band, and the light transmission loss peak wavelength of an order mode subsequent to the set order is on the longer wavelength side than the transmission band;

a period of said second long period grating is determined such that the light transmission loss peak wavelength of a predetermined set order mode among the intrinsic light transmission loss peaks is on the longer wavelength side than the transmission band, and the light transmission loss peak wavelength of an order mode preceding to the set order is on the shorter wavelength side than the transmission band; and

the shift amount of the respective light transmission loss peak wavelengths of the set order modes of said first and second long period gratings is set to about 0.05 nm/°C or higher, respectively.

11. The optical component as claimed in claim 9, wherein:

each of said first and second long period gratings has an intrinsic light transmission loss characteristic having a plurality of light transmission loss peaks of from a primary mode to an n-th order mode (N is an integer of 2 or more) with the wavelength intervals put between the peaks, the peaks being caused by coupling of a propagation mode with a higher-order cladding mode through the long period grating;

a period of said first long period grating is determined such that the light transmission loss peak wavelength of a predetermined set order mode among the intrinsic light transmission loss peaks is on the shorter wavelength side than the transmission band, and the light transmission loss peak wavelength of an order mode subsequent to the set order is on the longer wavelength side than the transmission band;

a period of said second long period grating is determined such that the light transmission loss peak wavelength of a predetermined set order mode among the intrinsic light transmission loss peaks is on the longer wavelength side than the transmission band, and the light transmission loss peak wavelength of an order mode preceding to the set order is on the shorter wavelength side than the transmission band; and

the shift amount of the respective light transmission loss peak wavelengths of the set order modes of said first and second long period gratings is set to about 0.05 nm/°C or higher, respectively.

12. The optical component as claimed in claim 4, wherein the length of said first long period grating in the longitudinal direction is longer than the length of said second long period grating in the longitudinal direction.

13. The optical component as claimed in claim 4, wherein the temperature characteristic of said first long period grating is smaller than the temperature characteristic of said second long period grating.

14. The optical component as claimed in claim 4, wherein the portions for forming said first long period grating and said second long period grating are coated with a resin having a temperature coefficient negative in refractive index.

15. The optical component as claimed in claim 8, wherein the portions for forming said first long period grating and said second long period grating are coated with a resin having a temperature coefficient negative in refractive index.

16. The optical component as claimed in claim 11, wherein the portions for forming said first long period grating and said second long period grating are coated with a resin having a temperature coefficient negative in refractive index.

17. The optical component as claimed in claim 14, wherein the temperature coefficient of the refractive index of the resin having the temperature coefficient negative in refractive index is $-0.5 \times 10^{-4}$/°C or lower.

18. The optical component as claimed in claim 15, wherein the temperature coefficient of the refractive index of the resin having the temperature coefficient negative in refractive index is $-0.5 \times 10^{-4}$/°C or lower.

19. The optical component as claimed in claim 16, wherein the temperature coefficient of the refractive index of the resin having the temperature coefficient negative in refractive index is $-0.5 \times 10^{-4}$/°C or lower.

## Fig. 1A

## Fig. 1B

## Fig. 2

## Fig. 3

EP 1 120 871 A1

Fig. 4

24

Fig. 5

Fig. 6

EP 1 120 871 A1

## Fig. 7

## Fig. 8

26

**European Patent Office**

## EUROPEAN SEARCH REPORT

Application Number

EP 01 30 0642

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 848 464 A (UNIV LELAND STANFORD JUNIOR) 17 June 1998 (1998-06-17) | 1 | H01S3/067 G02B6/16 |
| Y | * column 12, line 36 - line 44; figure 8 * | 2,3 | |
| Y | EP 0 897 124 A (PHOTONICS RESEARCH ONTARIO) 17 February 1999 (1999-02-17) * column 4, line 56 - column 5, line 1 * | 2,3 | |
| A | EP 0 909 965 A (LUCENT TECHNOLOGIES INC) 21 April 1999 (1999-04-21) * the whole document * | 1,13-19 | |
| P,X | EP 1 063 741 A (FUJITSU LTD) 27 December 2000 (2000-12-27) * page 1, line 45 - line 49; figure 7 * | 1 | |
| P,X | EP 1 003 253 A (LUCENT TECHNOLOGIES INC) 24 May 2000 (2000-05-24) * page 3, line 58 - page 4, line 27 * | 1-19 | |

TECHNICAL FIELDS SEARCHED (Int.Cl.7)

H01S
G02B

The present search report has been drawn up for all claims

| Place of search | Date of completion of the search | Examiner |
|---|---|---|
| MUNICH | 18 April 2001 | Jobst, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 01 30 0642

This annex lists the patent family members relating to the patent documents cited in the above–mentioned European search report.
The members are as contained in the European Patent Office EDP file on
The European Patent Office is in no way liable for these particulars which are merely given for the purpose of information.

18-04-2001

| Patent document cited in search report | | Publication date | Patent family member(s) | | Publication date |
|---|---|---|---|---|---|
| EP 0848464 | A | 17-06-1998 | US | 5875203 A | 23-02-1999 |
| | | | CA | 2220786 A | 13-06-1998 |
| | | | CN | 1184944 A | 17-06-1998 |
| | | | DE | 69704015 D | 08-03-2001 |
| | | | JP | 10241429 A | 11-09-1998 |
| | | | TW | 382845 B | 21-02-2000 |
| EP 0897124 | A | 17-02-1999 | JP | 11174245 A | 02-07-1999 |
| EP 0909965 | A | 21-04-1999 | US | 6011886 A | 04-01-2000 |
| | | | JP | 11202113 A | 30-07-1999 |
| EP 1063741 | A | 27-12-2000 | JP | 2000341213 A | 08-12-2000 |
| | | | US | 6201636 B | 13-03-2001 |
| EP 1003253 | A | 24-05-2000 | US | 6049414 A | 11-04-2000 |
| | | | JP | 2000164955 A | 16-06-2000 |

EPO FORM P0459

For more details about this annex : see Official Journal of the European Patent Office, No. 12/82